# EUROPÄISCHE PATENTSCHRIFT

(11) **EP 1 927 170 B1**
(45) Veröffentlichungstag und Bekanntmachung des Hinweises auf die Patenterteilung: **11.05.2011**
(21) Anmeldenummer: 06793593.2
(22) Anmeldetag: 18.09.2006
(51) Int. Cl.: H02B 1/20

(54) **SAMMELSCHIENENANORDNUNG FÜR EINE ELEKTRISCHE SCHALTANLAGE**
BUSBAR ARRANGEMENT FOR AN ELECTRICAL SWITCHGEAR ASSEMBLY
ENSEMBLE BARRE COLLECTRICE POUR UNE INSTALLATION DE DISTRIBUTION ELECTRIQUE

(30) Priorität: 23.09.2005 DE 102005047689
(43) Veröffentlichungstag der Anmeldung: 04.06.2008
(73) Patentinhaber: SIEMENS AKTIENGESELLSCHAFT, 80333 München (DE)
(72) Erfinder: GOHLICKE, Kay, 04157 Leipzig (DE); HAAS, Volker, 06804 Muldenstein (DE); SCHMIDT, Mario, 04178 Leipzig (DE); ZICKMANTEL, Mathias, 04329 Leipzig (DE)
(86) Internationale Anmeldenummer: PCT/EP2006/066452
(87) Internationale Veröffentlichungsnummer: WO 2007/033948

(56) Entgegenhaltungen:
- DE-C1- 19 953 561
- US-A- 5 941 654

## Beschreibung

Die Erfindung betrifft eine Sammelschienenanordnung für eine elektrische Schaltanlage.

Schaltanlagen werden seit einiger Zeit nicht nur als Einfrontanordnung, sondern auch als Doppelfrontanordnung ausgeführt. Die Doppelfrontanordnung ist so aufgebaut, dass die Anlage sowohl an der Vorderseite (vorn), als auch an der Rückseite (hinten) eine Bedienfront aufweist. Darüber hinaus weist die Doppelfrontanordnung ein gemeinsames Sammelschienensystem auf. Die Anbindungen der Feldschienen erfolgen dabei von vorn als auch von hinten an die gemeinsame, mittig liegende Sammelschiene.

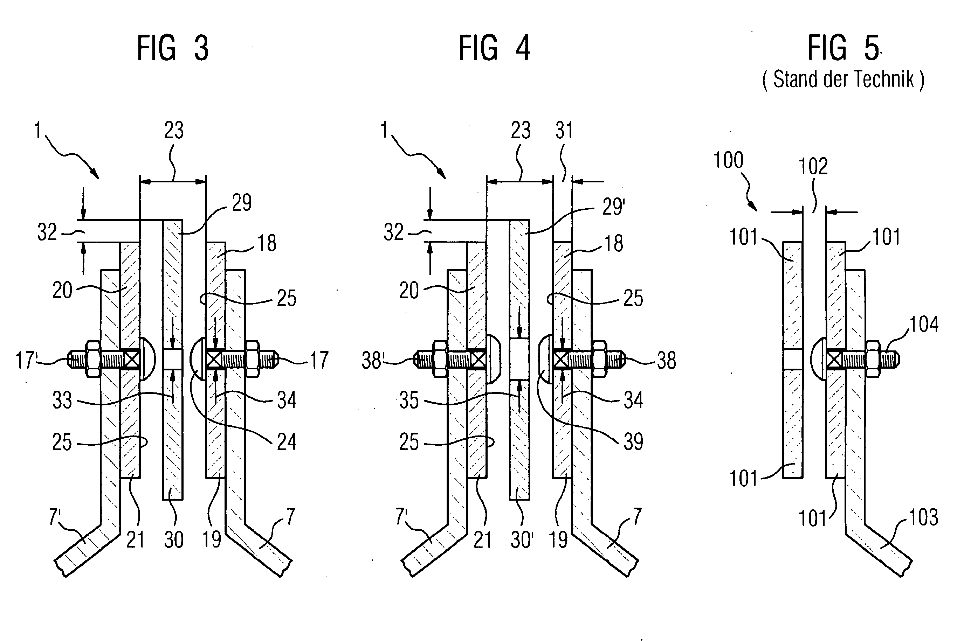

Bei mehrphasigen Sammelschienenanordnungen kommen oft Phasenschienen zum Einsatz, die in mehrere (zumeist zwei oder vier) Teilleiter unterteilt sind. Im Niederspannungsbereich wird eine solche Unterteilung meist genutzt, um die Wirbelstromverluste zu reduzieren. Beispielhaft zeigt die deutsche Patentschrift DE 199 53 561 C1 eine Anordnung mit zwei Teilleitern. Bei den bisher bekannten Sammelschienenanordnungen 100 mit vier im Rechteck angeordneten Teilleitern 101 und einem Abstand 102 der Teilleiter von etwa 10 mm mussten stets die verschiedenen Anbindungsmöglichkeiten von vorn und hinten berücksichtigt werden, um beim Anschluss von Feldschienen 103 an die Sammelschiene eine Kollision der Anschlussschrauben 104 zu vermeiden, vgl. FIG 5. Für einen gleichzeitigen Anschluss von Geräten an die Sammelschiene von vorn und hinten war eine komplexe Systematik notwendig. Darüber hinaus weisen Sammelschienenanordnungen mit vier im Rechteck angeordneten Teilleitern eine für viele Fälle nur ungenügende Stromtragfähigkeit auf.

Eine Aufgabe der vorliegenden Erfindung ist es daher, eine Lösung zu finden, mit der eine höhere Stromtragfähigkeit in den Teilleitern erreicht wird.

Diese Aufgabe wird durch eine Sammelschienenanordnung nach Anspruch 1 gelöst. Danach ist es vorgesehen, dass die Sammelschiene, die von wenigstens einem Sammelschienenhalter gehalten wird, wenigstens zwei erste (vordere) Teilleiter, wenigstens zwei zweite (hintere) Teilleiter und wenigstens zwei zwischen den ersten Teilleitern und den zweiten Teilleitern angeordnete dritte (mittlere) Teilleiter aufweist, wobei die mittleren Teilleiter quer zur Sammelschienenlängsrichtung über die vorderen und hinteren Teilleiter hinausragen. Dabei sind die vorderen, mittleren und hinteren Teilleiter der Sammelschiene vorzugsweise jeweils quer zur Sammelschienenlängsrichtung fluchtend zueinander angeordnet und weisen die gleiche Dicke (hier vorzugsweise 10 mm) auf.

Eine erste Grundidee der Erfindung besteht zunächst darin, den Abstand zwischen den vorderen und hinteren Teilleitern zu erhöhen und in den entstehenden vergrößerten Zwischenraum zwischen den vorderen und hinteren Teilleitern eine Anzahl mittlerer Teilleiter anzuordnen. Dies hat insgesamt eine höhere Stromtragfähigkeit zur Folge. Die Querschnitte je Phase können für Bemessungsströme über 3500 A ausgelegt werden. Der Abstand zwischen den vorderen Teilleitern und den hinteren Teilleitern entspricht dabei mindestens der zweifachen, vorzugsweise jedoch mindestens der dreifachen Dicke eines Teilleiters. Der Abstand ist anders ausgedrückt vorzugsweise gröβer oder gleich der zwei- bzw. dreifachen Dicke eines Teilleiters.

Darüber hinaus kann mit der Verwirklichung dieser Grundidee bei einer Doppelfrontanordnung der vergrößerte Zwischenraum zwischen den vorderen und hinteren Teilleitern für Anschlüsse nach vorn und nach hinten genutzt werden, ohne dass es zu Kollisionen der Verbindungselemente (vorzugsweise Anschlussschrauben) kommt. Der gleichzeitige Anschluss von Geräten an die Sammelschiene von vorn und hinten im Rahmen einer Doppelfrontanordnung ist damit äußerst einfach durchführbar.

Es hat sich nun gezeigt, dass wegen des Skin-Effektes die Stromaufteilung auf die einzelnen Teilleiter sehr unterschiedlich ist. Insbesondere tragen die mittleren Teilleiter kaum Strom. Damit kommt es zu einem ungünstigen Verhältnis von Querschnitt je Phase zu übertragbaren Strom.

Nach einer weiteren Grundidee der Erfindung ist es daher vorgesehen, die mittleren Teilleiter derart auszubilden, dass sie quer zur Sammelschienenlängsrichtung über die vorderen und hinteren Teilleiter hinausragen. Mit anderen Worten sind die mittleren Teilleiter nach außen versetzt, damit höher als die äußeren Teilleiter und überragen diese. Dadurch, dass die mittleren Teilleiter vertikal nicht mehr auf der gleichen Höhe liegen, wie die äußeren Teilleiter, wird erreicht, dass die Stromaufteilung auf die einzelnen Teilleiter je Phase sehr gleichmäßig ist, wie Messungen ergeben haben. Dies ist auf den Skineffekt zurückzuführen. Dieser bewirkt eine Verschiebung der Stromverteilung in Richtung der mittleren Teilleiter. Durch die Verschiebung der mittleren Teilleiter gegenüber den äußeren Teilleitern ergibt sich eine der Kreisform angenäherte Querschnittskontur der beteiligten Teilleiter (gegenüber der viereckigen Struktur bei nur vier oder sechs nicht versetzt zueinander angeordneten Teilleitern). In der Stromschiene mit dieser Querschnittskontur lässt sich eine besonders hohe Stromtragfähigkeit erreichen. Darüber hinaus kann mit dieser Anordnung der mittleren Teilleiter eine höhere Stromtragfähigkeit bei gleichem Kupferquerschnitt erreicht werden.

Vorteilhafte Ausgestaltungen der Erfindung sind in den Unteransprüchen angegeben.

In allen Fällen muss die mittlere Sammelschiene breiter sein als die vordere und die hintere Sammelschiene, damit sie über diese hinausragt. Dabei kann jedoch der Abstand zwischen den einzelnen Teilleitern des mittleren Teilleiterpaares unterschiedlich sein.

Gemäß einer ersten Ausführungsform der Erfindung sind die mittleren Teilleiter der Sammelschiene breiter als die vorderen und hinteren Teilleiter und der Abstand zwischen den zwei mittleren Teilleitern ist gleich dem Abstand zwischen den zwei vorderen Teilleitern bzw. den zwei hinteren Teilleitern. Dies ist insbesondere aus fertigungstechnischer Sicht von Vorteil, da das in die Sammelschienen zur Herstellung der Teilleiterpaare einzubringende Langloch stets auf die gleiche Art und Weise erzeugt werden kann.

Gemäß einer zweiten Ausführungsform der Erfindung sind die mittleren Teilleiter der Sammelschiene quer zur Sammelschienenlängsrichtung verschoben angeordnet derart, dass der Abstand zwischen den zwei mittleren Teilleitern größer ist als der Abstand zwischen den zwei vorderen Teilleitern bzw. den zwei hinteren Teilleitern. Besonders vorteilhaft für die gleichmäßige Stromverteilung ist es in diesem Fall, wenn die dritten Teilleiter der Sammelschiene die gleiche Breite aufweisen wie die ersten und zweiten Teilleiter.

Zur Sicherstellung einer einfachen Anschlusssystematik liegen die Schraubenköpfe vorzugsweise an den aufeinander zu weisenden Innenseiten der vorderen und hinteren Teilleiter an. So sind die Schraubenköpfe der Anschlussschrauben für die Anschlüsse von vorn zwischen den vorderen und den mittleren Teilleitern angeordnet, während die Schraubenköpfe der Anschlussschrauben für die Anschlüsse von hinten zwischen den mittleren und den hinteren Teilleitern angeordnet sind.

Die erfindungsgemäße Sammelschienenanordnung ist vorzugsweise derart ausgebildet, dass die ersten Anschlussschrauben zur Herstellung einer Verbindung zwischen einer Feldschiene und den vorderen Teilleitern zu den zweiten Anschlussschrauben zur Herstellung einer Verbindung zwischen einer Feldschiene und den hinteren Teilleitern montierbar beliebig angeordnet sein können. Sie können beispielsweise nicht fluchtend oder aber auch fluchtend zueinander angeordnet sein. Mit anderen Worten ermöglicht der vergrößerte Abstand zwischen den vordern und hinteren Teilleitern eine Montage der Feldschienen derart, dass die Anschlussschrauben auf einer Höhe und versetzt zueinander oder aber fluchtend montiert werden können. Da nicht mehr - wie aus dem Stand der Technik bekannt - ein einzige Anschlussschraube verwendet wird, um die Feldschienen an die Sammelschiene anzuschließen, sondern erfindungsgemäß zwei voneinander unabhängig Anschlussschrauben, ist der vordere von dem hinteren Anschluss entkoppelt.

Jedoch ist es ebenfalls möglich, dass anstelle der ersten und zweiten Anschlussschrauben durchgehende Anschlussschrauben verwendet werden. Mit anderen Worten verlaufen diese Anschlussschrauben durch die vorderen, mittleren und hinteren Teilleiter und verbinden diese mit einer anzuschließenden Feldschiene. Da in diesem Fall ein gleichzeitiger Anschluss von vorn und von hinten nicht mehr möglich ist, sind derartige durchgehende Anschlussschrauben besonders dann von Vorteil, wenn nur eine einzige Feldschiene an die Sammelschiene angeschlossen werden soll und/oder wenn es sich um eine Einfrontanordnung handelt.

Als Anschlussschrauben können Flachrundschrauben mit Vierkantansatz nach DIN 603 verwendet werden. Besonders vorteilhaft für eine schnelle und sichere Montage hat es sich jedoch erwiesen, wenn als Anschlussschrauben Hammerschrauben mit Vierkantansatz nach DIN 186 zum Einsatz kommen. Dies bietet gegenüber den Flachrundschrauben mit Vierkantansatz den Vorteil, dass die Schraube in den Freiraum zwischen den Teilleitern einer bereits fertig montierten Anordnung von vorn oder hinten eingeführt und in dem Freiraum um 90° gedreht werden kann. Mit anderen Worten verdreht sich die Schraube bei einem Anziehen der Mutter nicht, da sich der Vierkantansatz zwischen den Teilleitern befindet.

Werden die Teilleiter der Sammelschiene in der Nähe der Feldschienenanschlüsse über vorzugsweise eingeschraubte Zwischenstücke miteinander verbunden, so wie das in einer weiteren bevorzugten Ausführungsform der Erfindung vorgesehen ist, so kann auf einfache Art und Weise ein Stromausgleich zwischen vorderen bzw. hinteren Teilleitern mit den mittleren Teilleitern hergestellt werden, ohne dass es zu einer Kollision zwischen vorderen und hinteren Anschlüssen kommt. Die Zwischenstücke sind dabei vorteilhafterweise ebenfalls aus Schienenmaterial (insbesondere Kupfer) gefertigt.

Die Erfindung wird nachfolgend anhand von Ausführungsbeispielen beschrieben, die mit Hilfe von Zeichnungen näher erläutert werden. Hierbei zeigen in vereinfachten, z. T. schematischen Darstellungen:
- FIG 1: einen Schaltschrank in Doppelfrontbauweise,
- FIG 2: eine Sammelschiene mit drei Teilleiterpaaren (per- spektivisch),
- FIG 3: eine Sammelschiene mit drei Teilleiterpaaren (Schnittdarstellung III-III in FIG 2),
- FIG 4: eine weitere Sammelschiene mit drei Teilleiterpaa- ren (Schnittdarstellung analog III-III in FIG 2), und
- FIG 5: eine Sammelschiene mit zwei Teilleiterpaaren nach dem Stand der Technik (Schnittdarstellung).

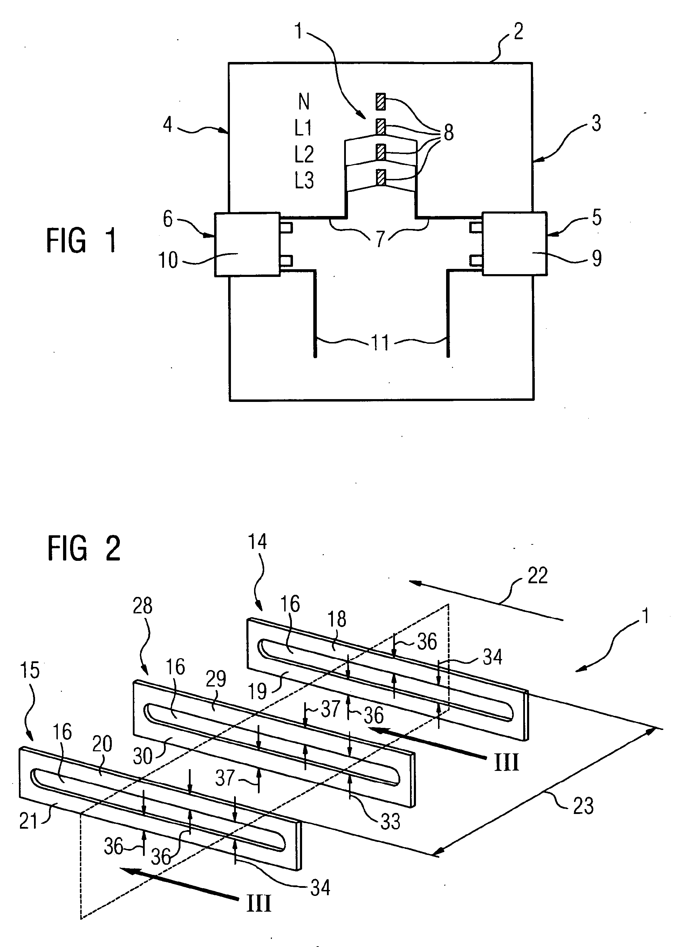

FIG 1 zeigt eine Sammelschienenanordnung 1 für eine Schaltanlage, also eine Anlage, in der die Verteilung elektrischer Energie erfolgt. Die Schaltanlage umfasst mehrere Schaltschränke 2. Sie ist als Doppelfrontanordnung ausgeführt. Das bedeutet, dass die Anlage sowohl an der Vorderseite 3 (vorn), als auch an der Rückseite 4 (hinten) eine Bedienfront 5, 6 aufweist. Darüber hinaus weist die Doppelfrontanordnung ein gemeinsames Sammelschienensystem (N, L1, L2, L3) auf. Die Anbindungen der Feldschienen 7 erfolgen dabei von vorn als auch von hinten an die gemeinsame, mittig liegende Sammelschiene 8 (Hauptsammelschiene). An die Feldschienen sind Schaltgeräte 9, 10 angeschlossen, deren Bedienfront 5, 6 jeweils aus der Vorderseite 3 bzw. Rückseite 4 des Schaltschrankes 2 zu Bedienzwecken herausragen. Von den Schaltgeräten 9, 10 gehen weitere Anschlussschienen 11 zu weiteren Geräten (nicht dargestellt) im Schaltschrank 2.

Unter einem Sammelschienensystem wird dabei eine Anzahl schienenförmiger Stromleiter in solcher Anzahl und Anordnung verstanden, wie sie zum Energietransport in ein- oder mehrphasigen Netzen benötigt werden. Die vorliegende Erfindung ist mit anderen Worten nicht nur auf Sammelschienen im eigentlichen Wortsinn beschränkt. Die Erfindung ist vielmehr bei jeder Art von Stromschiene anwendbar.

FIG 2 zeigt eine einzelne Sammelschiene 8 der Sammelschienenanordnung. Der Sammelschienenhalter ist aus Gründen der Übersichtlichkeit nicht mit dargestellt. Er befindet sich vorzugsweise an wenigstens einem der Freienden der Sammelschiene 8. Im Beispiel wird die Sammelschiene L1 dargestellt. Diese Sammelschiene 8 weist drei Stromschienen 14, 15, 28 aus Kupfer auf, die jeweils mittig ein Langloch 16 zur Montage der Feldschienen 7, 7' mittels Anschlussschrauben 17, 17' aufweisen. Dadurch ergeben sich insgesamt drei Teilleiterpaare, wie in FIG 3 dargestellt. Das erste Teilleiterpaar umfasst dabei die oberhalb und unterhalb des Langloches 16 der ersten Stromschiene 14 ausgebildeten Teilleiter 18, 19. Das zweite Teilleiterpaar umfasst die oberhalb und unterhalb des Langloches 16 der zweiten Stromschiene 15 ausgebildeten Teilleiter 20, 21. Das dritte Teilleiterpaar umfasst die oberhalb und unterhalb des Langloches 16 der dritten Stromschiene 28 ausgebildeten Teilleiter 29, 30. Die vorderen Teilleiter 18, 19, die hinteren Teilleiter 20, 21 sowie die mittleren Teilleiter 29, 30 der Sammelschiene 8 verlaufen dabei jeweils quer zur Sammelschienenlängsrichtung 22 fluchtend zueinander.

Der Abstand 23 zwischen den vorderen Teilleitern 18, 19 und den hinteren Teilleitern 20, 21 entspricht dabei der dreifachen Dicke eines Teilleiters 18, 19, 20, 21. Im vorliegenden Fall beträgt die Dicke 31 eines Teilleiters 10 mm (vgl. FIG 3) und der Abstand 23 zwischen den vorderen Teilleitern 18, 19 und den hinteren Teilleitern 20, 21 beträgt 30 mm.

In der in FIG 3 dargestellten Ausführungsform weisen die mittleren Teilleiter 29, 30 der Sammelschiene 8 eine größere Breite 37 auf als die vorderen und hinteren Teilleiter 18, 19, 20, 21, die jeweils eine geringere Breite 36 aufweisen. Die mittleren Teilleiter 29, 30 ragen daher über die vorderen und hinteren Teilleiter 18, 19, 20, 21 um eine Länge 32 hinaus. Dabei ist der Abstand 33 zwischen den zwei mittleren Teilleitern 29, 30 gleich dem Abstand 34 zwischen den zwei vorderen Teilleitern 18, 19 bzw. den zwei hinteren Teilleitern 20, 21. Mit anderen Worten sind die Langlöcher 16 in allen drei Sammelschienen 8 gleich breit. Die mittlere Stromschiene 28 ist genau in der Mitte zwischen den äußeren Stromschienen 14, 15 angeordnet.

Die Feldschienen 7, 7' sind durch Anschlussschrauben 17, 17' mit den vorderen und hinteren Teilleitern 18, 19, 20, 21 verbunden. Als Anschlussschrauben 17, 17' werden Flachrundschrauben mit Vierkantansatz nach DIN 603 verwendet. Die Anschlussschrauben 17, 17' liegen dabei zwischen den beiden vorderen Teilleitern 18, 19 bzw. den beiden hinteren Teilleitern 20, 21 in den entsprechenden Langlöchern 16 ein und mit ihren Schraubenköpfen 24 an den aufeinander zu weisenden Innenseiten 25 der vorderen und hinteren Teilleiter 18, 19, 20, 21 an. Die vorderen Anschlussschrauben 17 sind dabei zu den hinteren Anschlussschrauben 17' versetzt montierbar.

In der in FIG 4 dargestellten Ausführungsform sind die mittleren Teilleiter 29, 30 der Sammelschiene 8 quer zur Sammelschienenlängsrichtung 22 verschoben angeordnet derart, dass der Abstand 35 zwischen den zwei mittleren Teilleitern 29, 30 größer ist als der Abstand 34 zwischen den zwei vorderen Teilleitern 18, 19 bzw. den zwei hinteren Teilleitern 20, 21. Mit anderen Worten sind die Langlöcher 16 der beiden äußeren Sammelschienen schmaler als das Langloch der mittleren Sammelschiene. Die Teilleiter 29, 30 der mittleren Sammelschiene weisen dabei die gleiche Breite 36 auf wie die ersten und zweiten Teilleiter 18, 19, 20, 21.

Auch bei dieser Ausführungsform sind die Feldschienen 7, 7' durch Anschlussschrauben mit den vorderen und hinteren Teilleitern 18, 19, 20, 21 verbunden. Als Anschlussschrauben 38, 38' werden jedoch hier aufgrund des größeren zur Verfügung stehenden Zwischenraumes zwischen dem mittleren Teilleitern 29, 30 Hammerschrauben mit Vierkantansatz nach DIN 186 verwendet. Die Anschlussschrauben 38, 38' liegen dabei wie zuvor zwischen den beiden vorderen Teilleitern 18, 19 bzw. den beiden hinteren Teilleitern 20, 21 in den entsprechenden Langlöchern 16 ein und mit ihren Schraubenköpfen 39 an den aufeinander zu weisenden Innenseiten 25 der vorderen und hinteren Teilleiter 18, 19, 20, 21 an. Die vorderen Anschlussschrauben 38 sind dabei wiederum zu den hinteren Anschlussschrauben 38' versetzt montierbar.

Vorzugsweise sind die vorderen mit den hinteren Teilleitern (bei zwei Teilleiterpaaren) bzw. die vorderen mit den mittleren Teilleitern und die mittleren mit den hinteren Teilleitern (bei drei Teilleiterpaaren) in der Nähe der Feldschienenanschlüsse über eingeschraubte Zwischenstücke aus Kupfer (nicht abgebildet) miteinander verbunden.

In diesem Zusammenhang sei darauf hingewiesen, dass der Abstand 23 zwischen den einzelnen Teilleiterpaaren in FIG 2 nicht maßstabsgemäß, sondern aus Gründen der Übersichtlichkeit stark vergrößert dargestellt sind.

### Bezugszeichenliste

- 1: Sammelschienenanordnung
- 2: Schaltschrank
- 3: Vorderseite
- 4: Rückseite
- 5: Bedienfront vorn
- 6: Bedienfront hinten
- 7: Feldschiene
- 8: Sammelschiene
- 9: Schaltgerät vorn
- 10: Schaltgerät hinten
- 11: Anschlussschiene
- 12: (frei)
- 13: (frei)
- 14: Stromschiene
- 15: Stromschiene
- 16: Langloch
- 17: Anschlussschraube
- 18: vorderer Teilleiter
- 19: vorderer Teilleiter
- 20: hinterer Teilleiter
- 21: hinterer Teilleiter
- 22: Sammelschienenlängsrichtung
- 23: Abstand
- 24: Schraubenkopf
- 25: Innenseite
- 26: (frei)
- 27: (frei)
- 28: Stromschiene
- 29: mittlerer Teilleiter
- 30: mittlerer Teilleiter
- 31: Teilleiterdicke
- 32: herausragende Länge
- 33: Abstand mittlere Teilleiter
- 34: Abstand äußere Teilleiter
- 35: Abstand mittlere Teilleiter
- 36: Teilleiterbreite
- 37: Teilleiterbreite
- 38: Anschlussschraube
- 39: Schraubenkopf

- 100: Sammelschienenanordnung
- 101: Teilleiter
- 102: Abstand
- 103: Feldschiene
- 104: Anschlussschraube

## Patentansprüche

1. Sammelschienenanordnung (1) für eine elektrische Schaltanlage, mit wenigstens einer Sammelschiene (8), die von wenigstens einem Sammelschienenhalter gehalten wird,
**dadurch gekennzeichnet,**
**dass** die Sammelschiene (8) wenigstens zwei erste Teilleiter (18, 19), wenigstens zwei zweite Teilleiter (20, 21) und wenigstens zwei zwischen den ersten Teilleitern (18, 19) und den zweiten Teilleitern (20, 21) angeordnete dritte Teilleiter (29, 30) aufweist, wobei die dritten Teilleiter (29, 30) quer zur Sammelschienenlängsrichtung (22) über die ersten und zweiten Teilleiter (18, 19, 20, 21) hinausragen.

2. Sammelschienenanordnung (1) nach Anspruch 1,
**dadurch gekennzeichnet,**
**dass** die dritten Teilleiter (29, 30) der Sammelschiene (8) breiter sind als die ersten und zweiten Teilleiter (18, 19, 20, 21) und der Abstand (33) zwischen den zwei dritten Teilleitern (29, 30) gleich ist dem Abstand (34) zwischen den zwei ersten Teilleitern (18, 19) bzw. den zwei zweiten Teilleitern (20, 21).

3. Sammelschienenanordnung (1) nach Anspruch 1 oder 2,
**dadurch gekennzeichnet,**
**dass** die dritten Teilleiter (29, 30) der Sammelschiene (8) quer zur Sammelschienenlängsrichtung (22) verschoben angeordnet sind derart, dass der Abstand (35) zwischen den zwei dritten Teilleitern (29, 30) größer ist als der Abstand (34) zwischen den zwei ersten Teilleitern (18, 19) bzw. den zwei zweiten Teilleitern (20, 21).

4. Sammelschienenanordnung (1) nach Anspruch 3,
**dadurch gekennzeichnet,**
**dass** die dritten Teilleiter (29, 30) der Sammelschiene (8) die gleiche Breite (36) aufweisen wie die ersten und zweiten Teilleiter (18, 19, 20, 21).

5. Sammelschienenanordnung (1) nach einem der Ansprüche 1 bis 4,
**dadurch gekennzeichnet,**
**dass** an den ersten und/oder zweiten Teilleitern (18, 19, 20, 21) der Sammelschiene (8) mit Hilfe einer Anzahl von Anschlussschrauben (17, 38) eine Feldschiene (7) angebracht ist, wobei die Schraubenköpfe (24, 39) an den aufeinander zu weisenden Innenseiten (25) dieser Teilleiter (18, 19, 20, 21) angeordnet sind.

6. Sammelschienenanordnung (1) nach einem der Ansprüche 1 bis 5,
**dadurch gekennzeichnet,**
**dass** die Verbindung zwischen einer Feldschiene (7) und den ersten Teilleitern (18, 19) mit einer Anzahl erster Anschlussschrauben (17) und die Verbindung zwischen einer Feldschiene (7') und den zweiten Teilleitern (20, 21) mit einer Anzahl zweiter Anschlussschrauben (17') hergestellt ist.

7. Sammelschienenanordnung (1) nach Anspruch 5 oder 6,
**dadurch gekennzeichnet,**
**dass** die Anschlussschrauben (38, 38') Hammerschrauben mit Vierkantansatz sind.

8. Sammelschienenanordnung (1) nach einem der Ansprüche 1 bis 7,
**dadurch gekennzeichnet,**
**dass** die Teilleiter (18, 19, 20, 21, 29, 30) der Sammelschiene (8) in der Nähe der Feldschienenanschlüsse zum Stromausgleich zwischen den Teilleitern (18, 19, 20, 21) über Zwischenstücke miteinander verbindbar sind.

## Claims

1. Busbar arrangement (1) for an electrical switchgear assembly, having at least one busbar (8) which is held by at least one busbar holder,
**characterized**
**in that** the busbar (8) has at least two first conductor elements (18, 19), at least two second conductor elements (20, 21) and at least two third conductor elements (29, 30) which are arranged between the first conductor elements (18, 19) and the second conductor elements (20, 21), with the third conductor elements (29, 30) protruding beyond the first and second conductor elements (18, 19, 20, 21) transverse to the longitudinal direction (22) of the busbar.

2. Busbar arrangement (1) according to Claim 1,
**characterized**
**in that** the third conductor elements (29, 30) of the busbar (8) are wider than the first and second conductor elements (18, 19, 20, 21), and the distance (33) between the two third conductor elements (29, 30) is equal to the distance (34) between the two first conductor elements (18, 19) and, respectively, between the two second conductor elements (20, 21).

3. Busbar arrangement (1) according to Claim 1 or 2,
**characterized**
**in that** the third conductor elements (29, 30) of the busbar (8) are arranged in a manner displaced transverse to the longitudinal direction (22) of the busbar in such a way that the distance (35) between the two third conductor elements (29, 30) is greater than the distance (34) between the two first conductor elements (18, 19) and, respectively, between the two second conductor elements (20, 21).

4. Busbar arrangement (1) according to Claim 3,
**characterized**
**in that** the third conductor elements (29, 30) of the busbar (8) have the same width (36) as the first and second conductor elements (18, 19, 20, 21).

5. Busbar arrangement (1) according to one of Claims 1 to 4,
**characterized**
**in that** a field rail (7) is fitted to the first and/or second conductor elements (18, 19, 20, 21) of the busbar (8) using a number of connection bolts (17, 38), with the bolt heads (24, 39) being arranged on the mutually facing inner faces (25) of these conductor elements (18, 19, 20, 21).

6. Busbar arrangement (1) according to one of Claims 1 to 5,
**characterized**
**in that** the connection between a field rail (7) and the first conductor elements (18, 19) is produced by a number of first connection bolts (17), and the connection between a field rail (7') and the second conductor elements (20, 21) is produced by a number of second connection bolts (17').

7. Busbar arrangement (1) according to Claim 5 or 6,
**characterized**
**in that** the connection bolts (38, 38') are T-head bolts with a square neck.

8. Busbar arrangement (1) according to one of Claims 1 to 7,
**characterized**
**in that** the conductor elements (18, 19, 20, 21, 29, 30) of the busbar (8) can be connected to one another by means of intermediate pieces in the vicinity of the field rail connections for current compensation between the conductor elements (18, 19, 20, 21).

## Revendications

1. Jeu de barres (1) pour une installation de distribution électrique, comprenant au moins une barre collectrice (8) qui est supportée par au moins un support de barre collectrice, **caractérisé en ce que** la barre collectrice (8) comprend au moins deux premiers sous-conducteurs (18, 19), au moins deux deuxièmes sous-conducteurs (20, 21) et au moins deux troisièmes sous-conducteurs (29, 30) situés entre les premiers sous-conducteurs (18, 19) et les deuxièmes sous-conducteurs (20, 21), les troisièmes sous-conducteurs (29, 30) dépassant les premiers et deuxièmes sous-conducteurs (18, 19, 20, 21) dans le sens perpendiculaire à la direction longitudinale de la barre collectrice (22).

2. Jeu de barres (1) selon la revendication 1, **caractérisé en ce que** les troisièmes sous-conducteurs (29, 30) de la barre collectrice (8) sont plus larges que les premiers et deuxièmes sous-conducteurs (18, 19, 20, 21) et la distance (33) entre les deux troisièmes sous-conducteurs (29, 30) est égale à la distance (34) entre les deux premiers sous-conducteurs (18, 19) resp. les deux deuxièmes sous-conducteurs (20, 21).

3. Jeu de barres (1) selon la revendication 1 ou 2, **caractérisé en ce que** les troisièmes sous-conducteurs (29, 30) de la barre collectrice (8) présentent un décalage perpendiculairement à la direction longitudinale de la barre collectrice (22) de manière à ce que la distance (35) entre les deux troisièmes sous-conducteurs (29, 30) soit supérieure à la distance (34) entre les deux premiers sous-conducteurs (18, 19) resp. les deux deuxièmes sous-conducteurs (20, 21).

4. Jeu de barres (1) selon la revendication 3, **caractérisé en ce que** les troisièmes sous-conducteurs (29, 30) de la barre collectrice (8) ont la même largeur (36) que les premiers et deuxièmes sous-conducteurs (18, 19, 20, 21).

5. Jeu de barres (1) selon l'une des revendications 1 à 4, **caractérisé en ce qu'**une barre de connexion (7) est installée sur les premiers et/ou deuxièmes sous-conducteurs (18, 19, 20, 21) de la barre collectrice (8) à l'aide d'un nombre de boulons de raccordement (17, 38), les têtes de boulon (24, 39) étant situées sur les côtés intérieurs (25) de ces sous-conducteurs (18, 19, 20, 21) tournés l'un vers l'autre.

6. Jeu de barres (1) selon l'une des revendications 1 à 5, **caractérisé en ce que** la liaison entre une barre de connexion (7) et les premiers sous-conducteurs (18, 19) est réalisée avec un nombre de premiers boulons de raccordement (17) et la liaison entre une barre de connexion (7') et les deuxièmes sous-conducteurs (20, 21) est réalisée avec un nombre de seconds boulons de raccordement (17').

7. Jeu de barres (1) selon la revendication 5 ou 6, **caractérisé en ce que** les boulons de raccordement (38, 38') sont des boulons à tête rectangulaire avec angles abattus à collet carré.

8. Jeu de barres (1) selon l'une des revendications 1 à 7, **caractérisé en ce que** les sous-conducteurs (18, 19, 20, 21, 29, 30) de la barre collectrice (8) peuvent être reliés les uns aux autres par le biais de pièces intermédiaires à proximité des raccordements avec les barres de connexion pour la compensation de courant entre les sous-conducteurs (18, 19, 20, 21).
